# EUROPEAN PATENT APPLICATION

(11) **EP 2 876 552 A2**
(43) Date of publication of application: **27.05.2015**
(21) Application number: 13807749.0
(22) Date of filing: 21.08.2013
(51) Int. Cl.: G06F 9/445

(54) **SOFTWARE INSTALLATION PACKAGE GENERATION AND SOFTWARE INSTALLATION METHOD, DEVICE, AND SYSTEM**

(30) Priority: 12.09.2012 CN 201210336298
(71) Applicant: ZTE Corporation, Shenzhen, Guangdong 518057 (CN)
(72) Inventor: WANG, Jingping, Shenzhen Guangdong 518057 (CN)
(74) Representative: Lampis, Marco
(86) International application number: PCT/CN2013/081920
(87) International publication number: WO 2013/189395

(57) **Abstract**

Software installation package generation and software installation methods, devices and systems are provided. The software installation package generation method includes: acquiring a software program compression package, and recording an installation path set by a user in an installation configuration file; and packing the software program compression package and the installation configuration file as a first compression package, and adding the first compression package to an end of the software installation program and performing compression, to form an executable second compression package as the final software installation package.

## Description

### Technical Field

The present invention relates to the computer field, and in particular, to software installation package generation and software installation methods, devices and systems.

### Background of the Related Art

In the computer application, it is inevitable to install and update relevant software program packages of the client.

In the related art, when the software program package of the client is installed and updated, generally the maintenance personnel copies the software program package to the client through the CD or other mobile storage devices, to issue and install the software program package.

In the method for installing and updating the software program package in the related art, for the situation of the installing device with less data volume, the above-mentioned issuing and installing the software program package through the mobile storage device is feasible; while for some client application software with the number of the clients being large and the clients being distributed dispersively, for example, operator programs in the mobile terminal application and the call center application, and Internet Protocol Television (IPTV) terminal programs, etc., a large number of the clients are included under the same server; and the maintenance personnel needs to select the installation path at each client when installing the software, and different client devices might install the same software program package under different paths, which brings huge work capacity for the subsequent maintenance personnel to maintain the software.

### Summary of the Invention

During a process of implementing the embodiments of the present invention, the inventor finds that the software program package in the related art only includes the software program file; when the installation of the software is performed, it needs to be copied to the client through the mobile storage device, such as, the CD, etc. to perform the installation of the software, and the installation complexity of the software installation method is high, and the automatic installation cannot be realized.

The embodiment of the present invention provides software installation package generation and software installation methods, devices and systems, to solve the problem that the mobile storage device, such as, the CD, etc. are required to perform software installation, when the software is installed and the installation complexity is high in the related art.

The embodiment of the present invention provides a software installation package generation method, comprising:
acquiring a software program compression package, and recording an installation path set by a user in an installation configuration file; and
packing the software program compression package and the installation configuration file as a first compression package, and adding the first compression package to an end of a software installation program and performing compression, to form an executable second compression package as a final software installation package.

Alternatively, the method further comprises:
generating a project version number of the software installation package according to an acquisition time of the software program compression package; and
recording the project version number in the installation configuration file.

Alternatively, the method further comprises: when a software program is updated,
performing a binary comparison on all files of the software installation package corresponding to a current project version number with all files of an original software program compression package, acquiring a difference file list, and packing files in the difference file list to generate a patch package of the software installation package corresponding to the current project version number; and
recording a uniform resource locator (URL) of the patch package in the installation configuration file.

The embodiment of the present invention further provides a software installation method, comprising:
sending a software installation request to a network side device, and receiving a software installation package fed back by the network side device according to the software installation request, wherein, the software installation package comprises an installation configuration file recording an installation path set by a user;
decompressing the software installation package, parsing out a software program compression package and the installation configuration file from an end of the software installation package, and decompressing the software program compression package to acquire a software program file; and
according to the installation configuration file, copying the software program file to the installation path, registering in a registry, and completing an installation of the software program file.

Alternatively, the method further comprises: when the installation configuration file further records a project version number generated according to an acquisition time of the software program compression package,
writing the project version number of the software installation package into a project version number record file.

Alternatively, the method further comprises: when the installation configuration file further comprises a uniform resource locator (URL) of a patch package,
according to the URL, sending a software update request to the network side device; and
receiving a patch package of the software installation package corresponding to a current project version number fed back by the network side device, and updating the software program file.

The embodiment of the present invention further provides a server, comprising:
a configuration file setting unit, configured to: acquire a software program compression package, and record an installation path set by a user in an installation configuration file; and
an installation package generation unit, configured to: pack the software program compression package and the installation configuration file of the configuration file setting unit as a first compression package, and add the first compression package to an end of a software installation program and perform compression, to form an executable second compression package as a final software installation package.

Alternatively, the configuration file setting unit is further configured to:
generate a project version number of the software installation package according to an acquisition time of the software program compression package; and
record the project version number in the installation configuration file.

Alternatively, the server further comprises a patch package generation unit, configured to:
when a software program is updated, perform a binary comparison on all files of the software installation package corresponding to a current project version number with all files of an original software program compression package, acquire a difference file list, and pack files in the difference file list to generate a patch package of the software installation package corresponding to the current project version number; and
record a uniform resource locator (URL) of the patch package in the installation configuration file.

The embodiment of the present invention further provides a client, comprising:
an acquiring unit, configured to: send a software installation request to a network side device, and receive a software installation package fed back by the network side device according to the software installation request, wherein, the software installation package comprises an installation configuration file recording an installation path set by a user;
a decompression unit, configured to: decompress the software installation package acquired by the acquiring unit, parse out a software program compression package and the installation configuration file from an end of the software installation package, and decompress the software program compression package to acquire a software program file; and
an installation unit, configured to: according to the installation configuration file acquired by decompressing through the decompression unit, copy the software program file to the installation path, register in a registry, and complete an installation of the software program file.

Alternatively, the acquiring unit is further configured to:
when the installation configuration file further records a project version number generated according to an acquisition time of the software program compression package, write the project version number of the software installation package into a project version number record file.

Alternatively, the client further comprises an update unit, configured to:
when the installation configuration file further comprises a uniform resource locator (URL) of a patch package, according to the URL, send a software update request to the network side device; and
receive a patch package of the software installation package corresponding to a current project version number fed back by the network side device, and update the software program file.

The embodiment of the present invention further provides a software installation system, comprising:
a server, configured to: acquire a software program compression package, and record an installation path set by a user in an installation configuration file; and pack the software program compression package and the installation configuration file as a first compression package, and add the first compression package to an end of a software installation program and perform compression, to form an executable second compression package as a final software installation package; and
a client, configured to: send a software installation request to the server, and receive a software installation package fed back by the server according to the software installation request; decompress the software installation package, parse out a software program compression package and the installation configuration file from the end of the software installation package, and decompress the software program compression package to acquire a software program file; and according to the installation configuration file, copy the software program file to the installation path, register in a registry, and complete an installation of the software program file.

Alternatively, the server is further configured to:
generate a project version number of the software installation package according to an acquisition time of the software program compression package; and
record the project version number in the installation configuration file.

Alternatively, the server is further configured to:
when a software program is updated, perform a binary comparison on all files of the software installation package corresponding to a current project version number with all files of an original software program compression package, acquire a difference file list, and pack files in the difference file list to generate a patch package of the software installation package corresponding to the current project version number; and
record a uniform resource locator (URL) of the patch package in the installation configuration file.

Alternatively, the client is further configured to:
when the installation configuration file further records a project version number generated according to an acquisition time of the software program compression package, write the project version number of the software installation package into a project version number record file.

Alternatively, the client is further configured to:
when the installation configuration file further comprises a uniform resource locator (URL) of the patch package, according to the URL, send a software update request to the network side device; and
receive the patch package of the software installation package corresponding to the current project version number fed back by the network side device, and update the software program file.

Alternatively, the server connects and interacts with the client using a hyper text transfer protocol (HTTP) and a hyper text transfer protocol secure (HTTPS).

The embodiment of the present invention further provides a software installation package generation method, comprising:
setting a software installation path uniformly, and storing installation path information; and
packing a software program package and the installation information as a data package, and adding the data package to an end of a software installation program, to form an executable software installation package;
wherein, the installation information comprises the installation path information and a project version number.

Alternatively, the method further comprises:
taking a generation time of the software installation package as a new project version number; and
storing the new project version number in a corresponding software installation package.

Alternatively, the method further comprises:
when the software installation package is generated, performing a binary comparison on all files of the software installation package corresponding to the new project version number with all files of an original software installation package, acquiring a difference file list, and packing files in the difference file list to generate a patch package of the software installation package corresponding to the new project version number; and
storing a storage location of the patch package.

The embodiment of the present invention further provides a software installation method, comprising:
sending a software installation request to a network side device, and receiving a software installation package fed back by the network side device according to the software installation request, wherein, the software installation package comprises installation information set by a user;
running the software installation package, parsing out a software program package and the installation information from an end of the software installation package, wherein, the installation information comprises: installation path information and a project version number; and
according to the installation path information, copying files in the software program package to the installation path, registering in a registry, and completing an installation of the software.

Alternatively, the method further comprises: when the software installation package comprises the project version number, writing the project version number of the software installation package into a file of a client.

Alternatively, the method further comprises:
the client sending a software update request to the network side device regularly; and
receiving a patch package of the software installation package corresponding to a new project version number fed back by the network side device, downloading the patch package and performing an update operation.

The embodiment of the present invention further provides a server, comprising:
a configuration unit, configured to: acquire a software program package, and store installation path information; and
an installation package generation unit, configured to: pack installation information and the software program package acquired by the configuration unit as a data package, and add the data package to an end of a software installation program, to form an executable software installation package;
wherein, the installation information comprises the installation path information and a project version number.

Alternatively, the configuration unit is further configured to: take a generation time of the software installation package as a new project version number; and
store the new project version number in a corresponding software installation package.

Alternatively, the server further comprises: a patch package generation unit, configured to:
perform a binary comparison on all files of the software installation package corresponding to the new project version number with all files of an original software installation package, acquire a difference file list, and pack files in the difference file list to generate a patch package of the software installation package corresponding to the new project version number; and
store a storage location of the patch package.

The embodiment of the present invention further provides a client, comprising:
an acquiring unit, configured to: send a software installation request to a network side device, and receive a software installation package fed back by the network side device according to the software installation request, wherein, the software installation package comprises installation information set by a user;
a parsing unit, configured to: run the software installation package, parse out a software program package and the installation information from an end of the software installation package, wherein, the installation information comprises: installation path information and a project version number; and
an installation unit, configured to: according to the installation path information, copy files in the software program package to the installation path, register in a registry, and complete an installation of the software.

Alternatively, the acquiring unit is further configured to: when the information comprises the project version number of the software installation package, write the project version number of the software installation package into a file of the client.

Alternatively, the client further comprises an update unit, configured to:
send a software update request to the network side device regularly; and
receive a patch package of the software installation package corresponding to a new project version number fed back by the network side device, download the patch package and perform an update operation.

The embodiment of the present invention further provides a software installation system, comprising:
a server, configured to: uniformly set a software installation path, and store installation path information; and pack the software program package and installation information as a data package, and add the data package to an end of a software installation program, to form an executable software installation package; wherein, the installation information comprises the installation path information and a project version number; and
a client, configured to: send a software installation request to a network side device, and receive a software installation package fed back by the network side device according to the software installation request, wherein, the software installation package comprises installation information set by a user; run the software installation package, parse out a software program package and the installation information from the end of the software installation package, wherein, the installation information comprises: installation path information and a project version number; and according to the installation path information, copy files in the software program package to the installation path, register in a registry, and complete an installation of the software.

Alternatively, the server is further configured to: take a generation time of the software installation package as a new project version number; and
store the new project version number in a corresponding software installation package.

Alternatively, the server is further configured to:
perform a binary comparison on all files of the software installation package corresponding to the new project version number with all files of an original software installation package, acquire a difference file list, and pack files in the difference file list to generate a patch package of the software installation package corresponding to the new project version number; and
store a storage location of the patch package.

Alternatively, the client is further configured to: when the software installation package comprises the project version number, write the project version number of the software installation package into a file of the client.

Alternatively, the client is further configured to: send a software update request to the network side device regularly; and
receive the patch package of the software installation package corresponding to the new project version number fed back by the network side device, download the patch package and perform an update operation.

Alternatively, the server connects and interacts with the client using a hyper text transfer protocol (HTTP) and a hyper text transfer protocol secure (HTTPS).

Through the methods, devices and systems of the embodiments of the present invention, the software installation package includes the installation configuration information; when the software is installed, the program file is installed according to the installation configuration file, the automatic online installation of the software can be realized and the software installation complexity is reduced.

### Brief Description of Drawings

FIG. 1 is a flow chart of a software installation package generation method provided by an embodiment one of the present invention;
FIG. 2 is a flow chart of a software installation method provided by an embodiment two of the present invention;
FIG. 3 is a structure diagram of a server provided by an embodiment three of the present invention;
FIG. 4 is a structure diagram of a client provided by an embodiment four of the present invention;
FIG. 5 is a structure diagram of a software installation system provided by an embodiment five of the present invention;
FIG. 6 is a flow chart of a software installation package generation method provided by an embodiment six of the present invention;
FIG. 7 is a flow chart of a software installation method provided by an embodiment seven of the present invention;
FIG. 8 is a structure diagram of a server provided by an embodiment eight of the present invention;
FIG. 9 is a structure diagram of a client provided by an embodiment nine of the present invention;
FIG. 10 is a structure diagram of a software installation system provided by an embodiment ten of the present invention.

### Preferred Embodiments of the Invention

The embodiments of the present invention provides software installation package generation and software installation methods, devices and systems, wherein the installation configuration file is set in the software installation package, the program file is installed according to the installation configuration file when the software is installed, and the automatic online installation of the software can be realized.

The embodiments of the present invention are described in detail with reference to the accompanying drawings hereinafter. It should be explained that, in the case of not conflicting, the embodiments in the present application and features in these embodiments can be combined with each other.

### Embodiment one

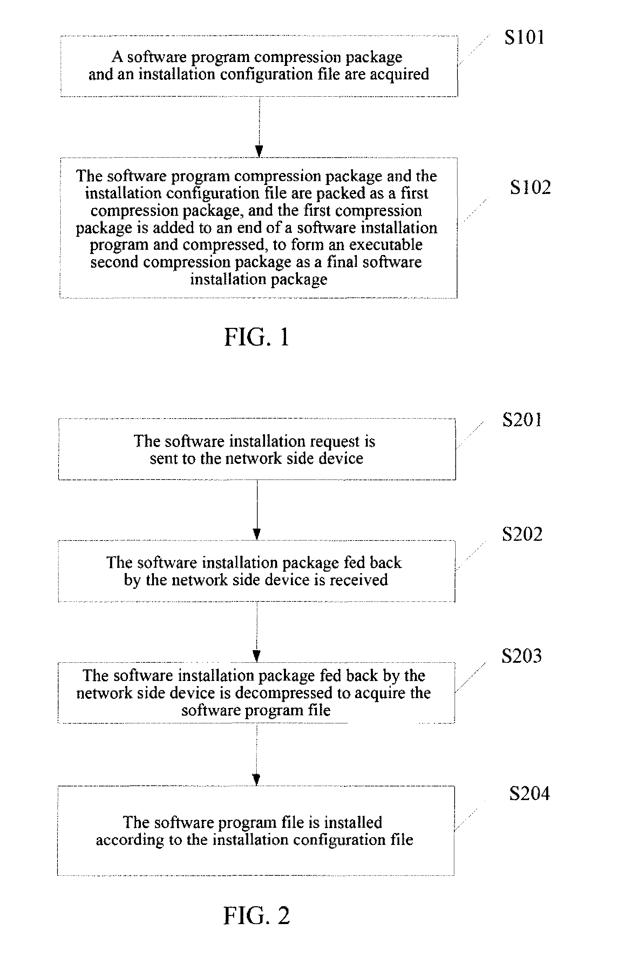

The embodiment of the present invention provides a software installation package generation method, as shown in FIG.1, including the following steps.

In step S101, a software program compression package and an installation configuration file are acquired.

The software installation process will include a plurality of program files, so the program files relevant to installing the software can be compressed as the software program package and uploaded, to complete the uploading of the software program package once, so as to reduce the resource occupation and reduce the maintenance difficulty.

The installation configuration file is the attribute information which is relevant to software installation and is set by the user according to the actual conditions of the client on which the software is installed, so that the software can be installed directly according to the installation configuration file when the software is installed subsequently, and it is not required to install artificially and manually any more. In the embodiment of the present invention, the users can, according to the actual conditions of the clients, preset the installation path of the software installation package, record the installation path set by the user in the installation configuration file, and when the software is installed, install the program file into the set installation path directly according to the installation path in the installation configuration file, which solves the problem that the installation paths of the client software are not unified in the related art and the maintenance difficulty is great in the later stage.

It should be illustrated that, with respect to the installation path in the embodiment of the present invention, the users can set it according to the actual conditions of the clients, the installation path can be flexibly set and changed and it is not unmodifiable, and the flexibility is greater.

In step S102, the software program compression package and the installation configuration file are packed as a first compression package, and the first compression package is added to an end of a software installation program and compressed, to form an executable second compression package as a final software installation package.

After the software program compression package uploaded by the user is acquired, it is stored locally, and the software program compression package and the installation configuration file (setup.ini) set by the user are packed together as a new compression package, that is, the first compression package (setup.zip), and finally the first compression package (setup.zip) and the length are added to the end of the software installation program, to form a new executable program file (setup.exe), that is, a final software installation package.

By adopting the software installation package generation method provided in the embodiment of the present invention, when the software installation package is generated, the installation path set by the user is recorded in the installation configuration file; and when the software is installed, the installation of the program file is performed according to the installation configuration file, which can realize the automatic online installation of the software and reduces the installation complexity of the software.

Alternatively, in the embodiment of the present invention, when the software program compression package uploaded by the user is acquired, the project version number of the software installation package can be generated according to the acquisition time of the software program compression package, that is, in the embodiment of the present invention, when the software installation package is generated, the project version number of the software installation package of which the form is YYYYMMDDHHMMSS according to the year, month, day, hour, minute and second of the current time, which reduces the development difficulty that the version number requires to be defined artificially or to be obtained from the program file when the software installation package is generated and also reduces the difficulty of maintaining the software in the later stage.

When the software installation package is generated, the project version number of the generated software installation package and/or the installation path set by the use can be recorded in the installation configuration file, to generate the software installation package with a uniform installation path and project version number, so as to facilitate the software maintenance in the later stage.

Alternatively, when the software is updated, the patch package of the software installation package can further be generated in the embodiment of the present invention. A binary comparison is performed on all files of the software installation package corresponding to a current project version number with all files of an original software program compression package, to acquire a difference file list, and the files in the difference file list are packed to acquire the patch package of the software installation package corresponding to the current project version number.

It should be illustrated that, when the patch package of the software installation package is generated, the software installation package corresponding to the current project version number and the patch package of the software installation package of an earlier version are combined, to acquire the version patch package of the present version relative to the earlier version.

In the embodiment of the present invention, by performing the binary comparison on all files in the software program package of the current version with all files in the original program package, not only the automatic generation of the patch package can be realized and the manual definition and maintenance can be avoided, but also, in the related art, it avoids the defect that it is inconvenient for maintaining and replacing files caused by that the program file name is modified or the program files are too many and the version numbers cannot be identified when the current version information is identified through the program file name or the program internal version identity (ID) of the client.

Alternatively, the uniform resource locator (URL) of the patch package of the generated software installation package can be recorded in the installation configuration file in the embodiment of the present invention; when the software is required to be updated and upgraded, the users can initiate an update and upgrade request according to the URL of the patch package stored locally directly, and realize an automatic upgrade.

### Embodiment two

The embodiment two of the present invention provides a method for installing the software by the software installation package in the application embodiment one, which realizes the automatic online installation of the software programs of the client. The software installation package generated in the embodiment one can be stored on the network side device, and when the user needs to install the software, it can be acquired from the network side device directly, and there is no need to utilize the mobile storage device, such as CD, etc., to copy. The implementation procedure of the software installation method provided by the embodiment two of the present invention is shown as FIG. 2, and the method includes the following steps.

In step S201, the software installation request is sent to the network side device.

The users can input, at the client, the URL address of the network side device where the software installation package is stored, and initiates an installation request to the network side device.

In step S202, the software installation package fed back by the network side device is received.

The software installation package stored in the network side device includes the installation configuration file recording the installation path set by the user, and when the network side device receives the installation request sent by the client, it is checked whether there is an active software installation package which accords with the installation request sent by the client; if yes, then the software installation package which accords with the installation request is fed back to the client.

Alternatively, the software installation packages in the network side device can be stored on different network servers. When there are a plurality of network servers, the network side device can feed back one URL of the network server where the software installation package is stored to the client according to the load situation of each network server, and the client downloads the software installation package according to the URL fed back by the network side device. After the client completes downloads the software installation package, the step S203 is executed.

In step S203, the software installation package fed back by the network side device is decompressed to acquire the software program file.

When the software installation package fed back by the network side device is received, the software program compression package and the installation configuration file are parsed out from the end of the software installation package, and the software program compression package is decompressed to acquire the software program file. After the software program file is acquired, step S204 can be executed to install the software program file.

In step S204, the software program file is installed according to the installation configuration file.

After the software program file is acquired by decompressing, the installation attribute information of the installation configuration file is parsed, and the installation of the current software program file is performed. Because the installation path set by the user is recorded in the installation configuration file, when the software program file is installed according to the installation configuration file, the installation path set by the user in the installation configuration file is parsed at first; and then the software program file acquired by decompressing is copied to the installation path in the installation configuration file to register in the registry, so as to complete the installation of the software program file.

Alternatively, when the installation configuration file also records the project version number of the software installation package, and when the software program file is installed, the project version number and the installation path of the software installation package in the installation configuration file are parsed at first; and then the project version number of the software installation package is written into the project version number record file, the software program file is copied to the installation path to register in the registry and complete the installation of the software program file.

Alternatively, when the network side device stores the patch package of the software installation package, the automatic update and upgrade of the software can be realized on the client. Because the URL of the patch package for the software installation package is recorded in the installation configuration file when the software is installed automatically, when the software is required to be updated and upgraded, the client can initiate a software update request to the network side device according to the URL of the patch package included in the installation configuration file directly, and perform the update and upgrade of the software program file.

The client can send the update request to the network side device regularly, and can carry the project version number of the current software installation package of the client when the update request is sent, so that the patch package is acquired when the automatic update and upgrade are performed subsequently.

When the network side device receives the update request sent by the client, according to its carried project version number, it is detected whether there is a patch package corresponding to the project version number; when there is a patch package corresponding to the project version numbering, the patch package of the software installation package corresponding to the project version number is fed back to the client, and the client performs the update of the software program file according to the acquired patch package.

With the above-mentioned software installation method provided by the embodiment of the present invention, not only the automatic installation of the software is realized and the problem that the target paths are not uniform when a large amount of client software is installed is solved, but also the carrying exemption and automatic installation of the client software are realized, and the automatic update and upgrade of the client software are realized, and the efficiency of uniformly issuing, installing and updating the client software is promoted.

### Embodiment three

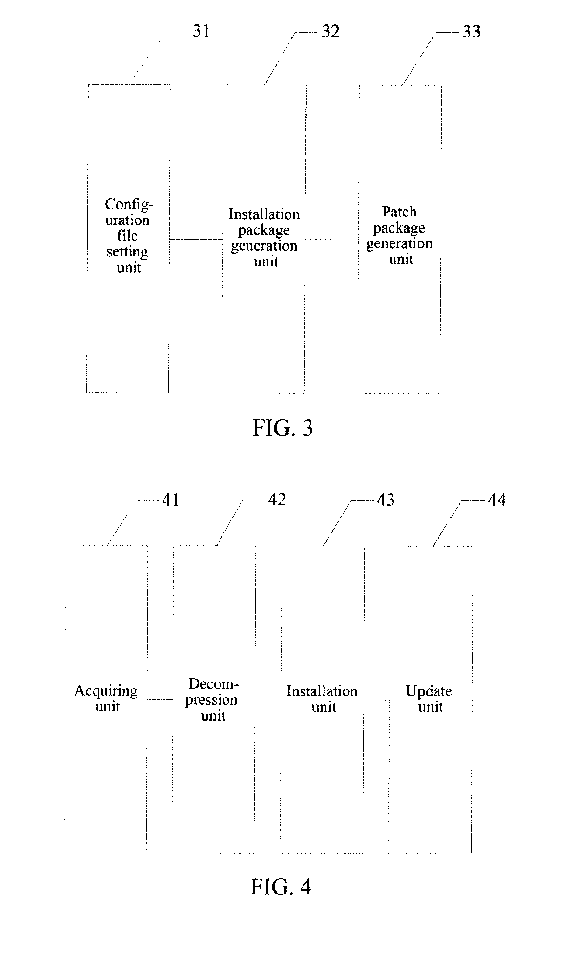

The embodiment three of the present invention further provides a server, its structure is shown in FIG. 3.

The server provided by the embodiment of the present invention includes:
a configuration file setting unit 31, configured to: acquire a software program compression package, and record an installation path set by a user in an installation configuration file; and
an installation package generation unit 32, configured to: pack the software program compression package and the installation configuration file of the configuration file setting unit 31 as a first compression package, and add the first compression package to an end of a software installation program and perform compression, to form an executable second compression package as a final software installation package.

Alternatively, the configuration file setting unit 31 is further configured to:
generate a project version number of the software installation package according to an acquisition time of the software program compression package; and
record the project version number in the installation configuration file.

Alternatively, the server provided by the embodiment of the present invention further includes a patch package generation unit 33, configured to: when a software program is updated, perform a binary comparison on all files of the software installation package corresponding to a current project version number with all files of an original software program compression package, acquire a difference file list, and pack files in the difference file list to generate a patch package of the software installation package corresponding to the current project version number; and record a uniform resource locator (URL) of the patch package in the installation configuration file.

With the server provided by the embodiment of the present invention, when the software installation package is generated, the installation configuration file including the information such as the installation path, the project version number and the URL of the patch package, etc., is set in the software installation package; when the software is installed, the program file is installed according to the installation configuration file, which can realize the automatic online installation of the software.

### Embodiment four

The embodiment four of the present invention further provides a client, its structure is shown in FIG. 4. The client includes:
an acquiring unit 41, configured to: send a software installation request to a network side device, and receive a software installation package fed back by the network side device according to the software installation request, wherein, the software installation package comprises an installation configuration file recording an installation path set by a user;
a decompression unit 42, configured to: decompress the software installation package acquired by the acquiring unit 41, parse out a software program compression package and the installation configuration file from an end of the software installation package, and decompress the software program compression package to acquire a software program file; and
an installation unit 43, configured to: according to the installation configuration file acquired by decompressing through the decompression unit 42, copy the software program file to the installation path, register in a registry, and complete an installation of the software program file.

Alternatively, the acquiring unit 41 is further configured to: when the installation configuration file further records a project version number generated according to an acquisition time of the software program compression package, write the project version number of the software installation package into a project version number record file.

Alternatively, the client in the embodiment of the present invention further includes an update unit 44, configured to:
when the installation configuration file further comprises a uniform resource locator (URL) of a patch package, according to the URL, send a software update request to the network side device; and receive the patch package of the software installation package corresponding to a current project version number fed back by the network side device, and update the software program file.

With the client provided by the embodiment of the present invention, not only the automatic installation of the software is realized and the problem that the target paths are not uniform when a large amount of client software is installed is solved, but also the carrying exemption and automatic installation of the client software are realized, and the automatic update and upgrade of the client software are realized, and the efficiency of uniformly issuing, installing and updating the client software is promoted.

### Embodiment five

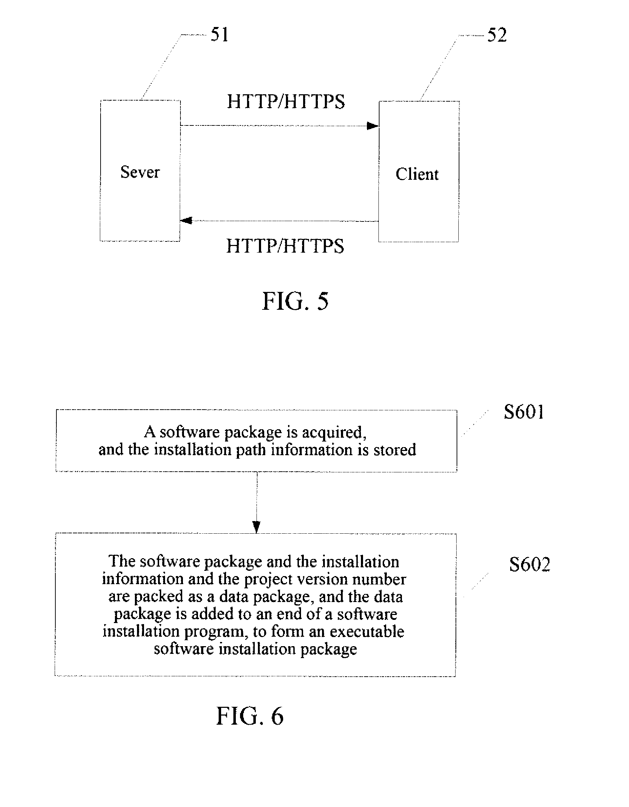

The embodiment five of the present invention further provides a software installation system, its structure is shown in FIG. 5. The system includes:
a server 51, configured to: acquire a software program compression package, and record an installation path set by a user in an installation configuration file; and pack the software program compression package and the installation configuration file as a first compression package, and add the first compression package to an end of a software installation program and perform compression, to form an executable second compression package as a final software installation package; and
a client 52, configured to: send a software installation request to the server 51, and receive a software installation package fed back by the server 51 according to the software installation request; decompress the software installation package, parse out a software program compression package and the installation configuration file from the end of the software installation package, and decompress the software program compression package to acquire a software program file; and according to the installation configuration file, copy the software program file to the installation path, register in a registry, and complete an installation of the software program file.

The server 51 is further configured to:
generate a project version number of the software installation package according to an acquisition time of the software program compression package; and record the project version number in the installation configuration file.

Alternatively, the server 51 is further configured to: when a software program is updated, perform a binary comparison on all files of the software installation package corresponding to a current project version number with all files of an original software program compression package, acquire a difference file list, and pack files in the difference file list to generate a patch package of the software installation package corresponding to the current project version number; and record a uniform resource locator (URL) of the patch package in the installation configuration file.

The client 52 is further configured to:
when the installation configuration file further records a project version number generated according to an acquisition time of the software program compression package, write the project version number of the software installation package into a project version number record file.

Alternatively, the client 52 is further configured to:
when the installation configuration file further includes a uniform resource locator (URL) of a patch package, according to the URL, send a software update request to the server 51; and
receive the patch package of the software installation package corresponding to a current project version number fed back by the server 51, and update the software program file.

Alternatively, the server 51 connects and interacts with the client 52 using a hyper text transfer protocol (HTTP) and a hyper text transfer protocol secure (HTTPS) in the embodiment of the present invention, to solve the problem that the installation complexity is high when the software is installed and when the client 52 is located in a different network.

### Embodiment six

The embodiment of the present invention further provides a software installation package generation method, as shown in FIG. 6, including the following steps.

In step S601, a software installation path is set uniformly, and installation path information is stored.

In step S602, a software program package and the installation information are packed as a data package, and the data package is added to an end of a software installation program, to form an executable software installation package; wherein, the installation information comprises the installation path information and a project version number.

Alternatively, in the embodiment of the present invention, the method further includes: taking a generation time of the software installation package as a new project version number; and storing the new project version number in a corresponding software installation package.

Alternatively, in the embodiment of the present invention, the method further includes: when the software installation package is generated, performing a binary comparison on all files of the software installation package corresponding to the new project version number with all files of an original software installation package, acquiring a difference file list, and packing files in the difference file list to generate a patch package of the software installation package corresponding to the new project version number; and storing a storage location of the patch package.

### Embodiment seven

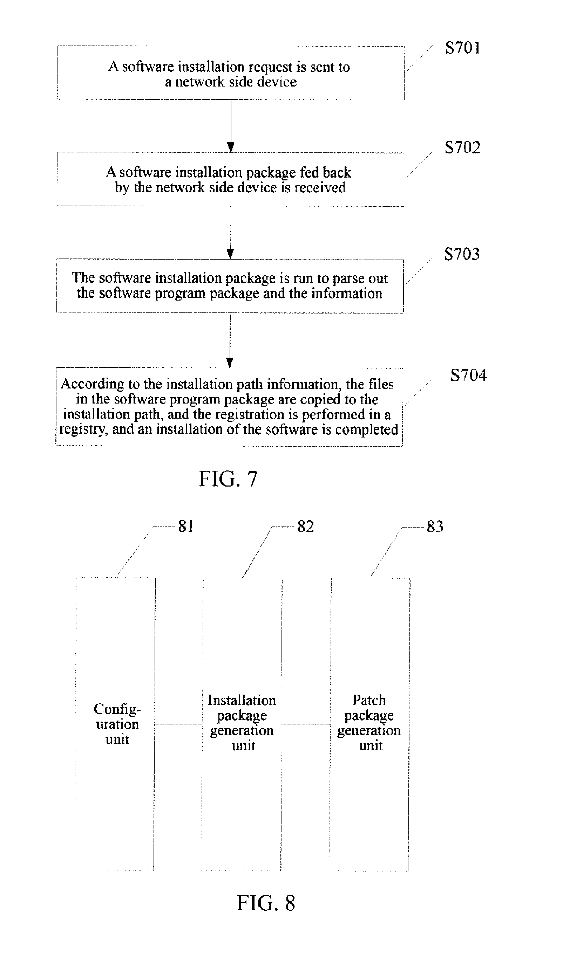

The embodiment of the present invention further provides a software installation method, as shown in FIG. 7, including the following steps.

In step S701, a software installation request is sent to a network side device.

In step S702, a software installation package fed back by the network side device according to the software installation request is received, wherein, the software installation package comprises installation information set by a user.

In step S703, the software installation package is run, a software program package and the installation information are parsed out from an end of the software installation package, wherein, the installation information comprises: installation path information and a project version number.

In step S704, according to the installation path information, files in the software program package are copied to the installation path, and the registration is performed in a registry, and an installation of the software is completed.

Alternatively, in the embodiment of the present invention, the method further includes: when the software installation package comprises the project version number, writing the project version number of the software installation package into a file of a client.

Alternatively, in the embodiment of the present invention, the method further includes: the client sending a software update request to the network side device regularly; and receiving a patch package of the software installation package corresponding to a new project version number fed back by the network side device, downloading the patch package and performing an update operation.

### Embodiment eight

The embodiment of the present invention further provides a server, as shown in FIG. 8, including:
a configuration unit 81, configured to: acquire a software program package, and store installation path information; and
an installation package generation unit 82, configured to: pack installation information and the software program package acquired by the configuration unit as a data package, and add the data package to an end of a software installation program, to form an executable software installation package; wherein, the installation information comprises the installation path information and a project version number.

Alternatively, the configuration unit 81 is further configured to: take a generation time of the software installation package as a new project version number; and store the new project version number in a corresponding software installation package.

Alternatively, the server further includes a patch package generation unit 83, configured to: perform a binary comparison on all files of the software installation package corresponding to the new project version number with all files of an original software installation package, acquire a difference file list, and pack files in the difference file list to generate a patch package of the software installation package corresponding to the new project version number; and store a storage location of the patch package.

### Embodiment nine

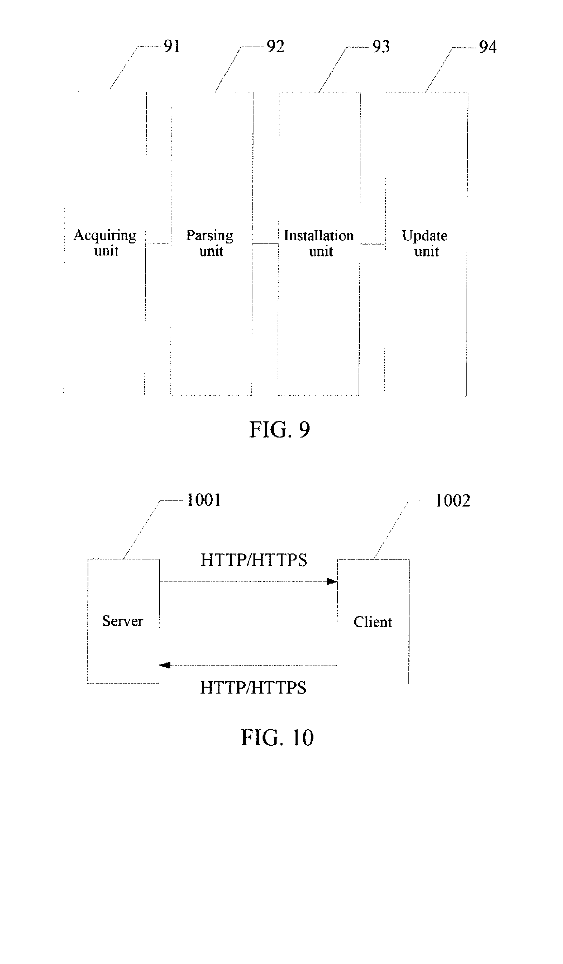

The embodiment of the present invention further provides a client, as shown in FIG. 9, including:
an acquiring unit 91, configured to: send a software installation request to a network side device, and receive a software installation package fed back by the network side device according to the software installation request, wherein, the software installation package comprises installation information set by a user;
a parsing unit 92, configured to: run the software installation package, parse out a software program package and the installation information from an end of the software installation package, wherein, the installation information comprises: installation path information and a project version number; and
an installation unit 93, configured to: according to the installation path information, copy files in the software program package to the installation path, register in a registry, and complete an installation of the software.

Alternatively, the acquiring unit 91 is further configured to: when the information comprises the project version number of the software installation package, write the project version number of the software installation package into a file of the client.

Alternatively, the client in the embodiment of the present invention further includes an update unit 94, where the update unit 94 is configured to: send a software update request to the network side device regularly; and receive a patch package of the software installation package corresponding to a new project version number fed back by the network side device, download the patch package and perform an update operation.

### Embodiment ten

The embodiment of the present invention further provides a software installation system, as shown in FIG. 10, including:
a server 1001, configured to: uniformly set a software installation path, and store installation path information; and pack the software program package and installation information as a data package, and add the data package to an end of a software installation program, to form an executable software installation package; wherein, the installation information comprises the installation path information and a project version number; and
a client 1002, configured to: send a software installation request to a network side device, and receive a software installation package fed back by the network side device according to the software installation request, wherein, the software installation package comprises installation information set by a user; run the software installation package, parse out a software program package and the installation information from the end of the software installation package, wherein, the installation information comprises: installation path information and a project version number; and according to the installation path information, copy files in the software program package to the installation path, register in a registry, and complete an installation of the software.

Alternatively, the server 1001 is further configured to: take a generation time of the software installation package as a new project version number; and store the new project version number in a corresponding software installation package.

Alternatively, the server 1001 is further configured to: perform a binary comparison on all files of the software installation package corresponding to the new project version number with all files of an original software installation package, acquire a difference file list, and pack files in the difference file list to generate a patch package of the software installation package corresponding to the new project version number; and store a storage location of the patch package.

Alternatively, the client 1002 is further configured to: when the software installation package comprises the project version number, write the project version number of the software installation package into a file of the client.

Alternatively, the client 1002 is further configured to: send a software update request to the network side device regularly; and receive a patch package of the software installation package corresponding to a new project version number fed back by the network side device, download the patch package and perform an update operation.

Alternatively, the server 1001 connects and interacts with the client 1002 using a hyper text transfer protocol (HTTP) and a hyper text transfer protocol secure (HTTPS).

With the software installation system provided by the embodiment of the present invention, for the large quantity of client applications, not only the problem that the installation complexity is high and the installation target paths are not uniform brought by that the client software is required to be installed through mobile devices such as CD, can be solved, but also the problem that the patch package maintenance is complicated during automatically updating and the version number and the storage location of the version need to be maintained manually when the version is issued, etc.

It should be illustrated that the structures of the server, the client and the software installation system involved in embodiment three to embodiment five are not limited to the structures involved in the embodiments of the present invention, and any software generation installation device and system structures obtained on the basis of conceptions which are the same with those in the embodiments of the present invention are all in the protection scope of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

Obviously, those skilled in the art can make various modifications and changes to the embodiment of the present invention without departing from the spirit and range of the present invention. In this way, if those modifications and changes of the embodiment of the present invention belong to the scope of the claims of the present invention and their equivalent technologies, then it is intended that those modifications and changes should be embodied in the present invention.

### Industrial Applicability

Through the methods, devices and systems of the embodiments of the present invention, the automatic online installation of the software can be realized and the software installation complexity is reduced.

## Claims

1. A software installation package generation method, comprising:
acquiring a software program compression package, and recording an installation path set by a user in an installation configuration file; and
packing the software program compression package and the installation configuration file as a first compression package, and adding the first compression package to an end of a software installation program and performing compression, to form an executable second compression package as a final software installation package.

2. The method according to claim 1, further comprising:
generating a project version number of the software installation package according to an acquisition time of the software program compression package; and
recording the project version number in the installation configuration file.

3. The method according to claim 2, further comprising: when a software program is updated,
performing a binary comparison on all files of the software installation package corresponding to a current project version number with all files of an original software program compression package, acquiring a difference file list, and packing files in the difference file list to generate a patch package of the software installation package corresponding to the current project version number; and
recording a uniform resource locator (URL) of the patch package in the installation configuration file.

4. A software installation method, comprising:
sending a software installation request to a network side device, and receiving a software installation package fed back by the network side device according to the software installation request, wherein, the software installation package comprises an installation configuration file recording an installation path set by a user;
decompressing the software installation package, parsing out a software program compression package and the installation configuration file from an end of the software installation package, and decompressing the software program compression package to acquire a software program file; and
according to the installation configuration file, copying the software program file to the installation path, registering in a registry, and completing an installation of the software program file.

5. The method according to claim 4, further comprising: when the installation configuration file further records a project version number generated according to an acquisition time of the software program compression package,
writing the project version number of the software installation package into a project version number record file.

6. The method according to claim 5, further comprising: when the installation configuration file further comprises a uniform resource locator (URL) of a patch package,
according to the URL, sending a software update request to the network side device; and
receiving a patch package of the software installation package corresponding to a current project version number fed back by the network side device, and updating the software program file.

7. A server, comprising:
a configuration file setting unit, configured to: acquire a software program compression package, and record an installation path set by a user in an installation configuration file; and
an installation package generation unit, configured to: pack the software program compression package and the installation configuration file of the configuration file setting unit as a first compression package, and add the first compression package to an end of a software installation program and perform compression, to form an executable second compression package as a final software installation package.

8. The server according to claim 7, wherein, the configuration file setting unit is further configured to:
generate a project version number of the software installation package according to an acquisition time of the software program compression package; and
record the project version number in the installation configuration file.

9. The server according to claim 8, further comprising a patch package generation unit, configured to:
when a software program is updated, perform a binary comparison on all files of the software installation package corresponding to a current project version number with all files of an original software program compression package, acquire a difference file list, and pack files in the difference file list to generate a patch package of the software installation package corresponding to the current project version number; and
record a uniform resource locator (URL) of the patch package in the installation configuration file.

10. A client, comprising:
an acquiring unit, configured to: send a software installation request to a network side device, and receive a software installation package fed back by the network side device according to the software installation request, wherein, the software installation package comprises an installation configuration file recording an installation path set by a user;
a decompression unit, configured to: decompress the software installation package acquired by the acquiring unit, parse out a software program compression package and the installation configuration file from an end of the software installation package, and decompress the software program compression package to acquire a software program file; and
an installation unit, configured to: according to the installation configuration file acquired by decompressing through the decompression unit, copy the software program file to the installation path, register in a registry, and complete an installation of the software program file.

11. The client according to claim 10, wherein, the acquiring unit is further configured to:
when the installation configuration file further records a project version number generated according to an acquisition time of the software program compression package, write the project version number of the software installation package into a project version number record file.

12. The client according to claim 11, further comprising an update unit, configured to:
when the installation configuration file further comprises a uniform resource locator (URL) of a patch package, according to the URL, send a software update request to the network side device; and
receive a patch package of the software installation package corresponding to a current project version number fed back by the network side device, and update the software program file.

13. A software installation system, comprising:
a server, configured to: acquire a software program compression package, and record an installation path set by a user in an installation configuration file; and pack the software program compression package and the installation configuration file as a first compression package, and add the first compression package to an end of a software installation program and perform compression, to form an executable second compression package as a final software installation package; and
a client, configured to: send a software installation request to the server, and receive a software installation package fed back by the server according to the software installation request; decompress the software installation package, parse out a software program compression package and the installation configuration file from the end of the software installation package, and decompress the software program compression package to acquire a software program file; and according to the installation configuration file, copy the software program file to the installation path, register in a registry, and complete an installation of the software program file.

14. The system according to claim 13, wherein, the server is further configured to:
generate a project version number of the software installation package according to an acquisition time of the software program compression package; and
record the project version number in the installation configuration file.

15. The system according to claim 14, wherein, the server is further configured to:
when a software program is updated, perform a binary comparison on all files of the software installation package corresponding to a current project version number with all files of an original software program compression package, acquire a difference file list, and pack files in the difference file list to generate a patch package of the software installation package corresponding to the current project version number; and
record a uniform resource locator (URL) of the patch package in the installation configuration file.

16. The system according to claim 13, wherein, the client is further configured to:
when the installation configuration file further records a project version number generated according to an acquisition time of the software program compression package, write the project version number of the software installation package into a project version number record file.

17. The system according to claim 16, wherein, the client is further configured to:
when the installation configuration file further comprises a uniform resource locator (URL) of the patch package, according to the URL, send a software update request to the network side device; and
receive the patch package of the software installation package corresponding to the current project version number fed back by the network side device, and update the software program file.

18. The system according to any one of claims 13 to 17, wherein, the server connects and interacts with the client using a hyper text transfer protocol (HTTP) and a hyper text transfer protocol secure (HTTPS).

19. A software installation package generation method, comprising:
setting a software installation path uniformly, and storing installation path information; and
packing a software program package and the installation information as a data package, and adding the data package to an end of a software installation program, to form an executable software installation package;
wherein, the installation information comprises the installation path information and a project version number.

20. The method according to claim 19, further comprising:
taking a generation time of the software installation package as a new project version number; and
storing the new project version number in a corresponding software installation package.

21. The method according to claim 20, further comprising: when the software installation package is generated,
performing a binary comparison on all files of the software installation package corresponding to the new project version number with all files of an original software installation package, acquiring a difference file list, and packing files in the difference file list to generate a patch package of the software installation package corresponding to the new project version number; and
storing a storage location of the patch package.

22. A software installation method, comprising:
sending a software installation request to a network side device, and receiving a software installation package fed back by the network side device according to the software installation request, wherein, the software installation package comprises installation information set by a user;
running the software installation package, parsing out a software program package and the installation information from an end of the software installation package, wherein, the installation information comprises: installation path information and a project version number; and
according to the installation path information, copying files in the software program package to the installation path, registering in a registry, and completing an installation of the software.

23. The method according to claim 22, further comprising: when the software installation package comprises the project version number,
writing the project version number of the software installation package into a file of a client.

24. The method according to claim 23, further comprising:
the client sending a software update request to the network side device regularly; and
receiving a patch package of the software installation package corresponding to a new project version number fed back by the network side device, downloading the patch package and performing an update operation.

25. A server, comprising:
a configuration unit, configured to: acquire a software program package, and store installation path information; and
an installation package generation unit, configured to: pack installation information and the software program package acquired by the configuration unit as a data package, and add the data package to an end of a software installation program, to form an executable software installation package;
wherein, the installation information comprises the installation path information and a project version number.

26. The server according to claim 25, wherein, the configuration unit is further configured to: take a generation time of the software installation package as a new project version number; and
store the new project version number in a corresponding software installation package.

27. The server according to claim 26, further comprising: a patch package generation unit, configured to:
perform a binary comparison on all files of the software installation package corresponding to the new project version number with all files of an original software installation package, acquire a difference file list, and pack files in the difference file list to generate a patch package of the software installation package corresponding to the new project version number; and
store a storage location of the patch package.

28. A client, comprising:
an acquiring unit, configured to: send a software installation request to a network side device, and receive a software installation package fed back by the network side device according to the software installation request, wherein, the software installation package comprises installation information set by a user;
a parsing unit, configured to: run the software installation package, parse out a software program package and the installation information from an end of the software installation package, wherein, the installation information comprises: installation path information and a project version number; and
an installation unit, configured to: according to the installation path information, copy files in the software program package to the installation path, register in a registry, and complete an installation of the software.

29. The client according to claim 28, wherein, the acquiring unit is further configured to:
when the information comprises the project version number of the software installation package,
write the project version number of the software installation package into a file of the client.

30. The client according to claim 29, further comprising an update unit, configured to:
send a software update request to the network side device regularly; and
receive a patch package of the software installation package corresponding to a new project version number fed back by the network side device, download the patch package and perform an update operation.

31. A software installation system, comprising:
a server, configured to: uniformly set a software installation path, and store installation path information; and pack the software program package and installation information as a data package, and add the data package to an end of a software installation program, to form an executable software installation package; wherein, the installation information comprises the installation path information and a project version number; and
a client, configured to: send a software installation request to a network side device, and receive a software installation package fed back by the network side device according to the software installation request, wherein, the software installation package comprises installation information set by a user; run the software installation package, parse out a software program package and the installation information from the end of the software installation package, wherein, the installation information comprises: installation path information and a project version number; and according to the installation path information, copy files in the software program package to the installation path, register in a registry, and complete an installation of the software.

32. The system according to claim 31, wherein, the server is further configured to: take a generation time of the software installation package as a new project version number; and
store the new project version number in a corresponding software installation package.

33. The system according to claim 32, wherein, the server is further configured to:
perform a binary comparison on all files of the software installation package corresponding to the new project version number with all files of an original software installation package, acquire a difference file list, and pack files in the difference file list to generate a patch package of the software installation package corresponding to the new project version number; and
store a storage location of the patch package.

34. The system according to claim 31, wherein, the client is further configured to: when the software installation package comprises the project version number,
write the project version number of the software installation package into a file of the client.

35. The system according to claim 34, wherein, the client is further configured to: send a software update request to the network side device regularly; and
receive the patch package of the software installation package corresponding to the new project version number fed back by the network side device, download the patch package and perform an update operation.

36. The system according to any one of claims 31 to 35, wherein, the server connects and interacts with the client using a hyper text transfer protocol (HTTP) and a hyper text transfer protocol secure (HTTPS).
